# EUROPEAN PATENT SPECIFICATION

(11) **EP 3 712 050 B1**
(45) Date of publication and mention of the grant of the patent: **13.03.2024**
(21) Application number: 18879722.9
(22) Date of filing: 15.11.2018
(51) Int. Cl.: B62K 5/027, F02N 11/08, B62K 5/05, B62K 5/10, B62L 3/08, B62K 5/08, B60G 17/017

(54) **LEANING VEHICLE**
NEIGEFAHRZEUG
VÉHICULE À INCLINAISON

(30) Priority: 17.11.2017 JP 2017221742
(43) Date of publication of application: 23.09.2020
(73) Proprietor: Yamaha Hatsudoki Kabushiki Kaisha, Iwata-shi, Shizuoka 438-8501 (JP)
(72) Inventor: SHIBUYA Yu, Iwata-shi Shizuoka 438-8501 (JP); NAKAMURA Kazuo, Iwata-shi Shizuoka 438-8501 (JP)
(74) Representative: Grünecker Patent- und Rechtsanwälte PartG mbB
(86) International application number: PCT/JP2018/042315
(87) International publication number: WO 2019/098284

(56) References cited:
- EP-A1- 2 127 920
- EP-A1- 2 199 122
- EP-A1- 2 292 496
- EP-A1- 3 124 365
- WO-A1-2011/161856
- WO-A1-2013/051195
- WO-A1-2015/146680
- WO-A1-2017/086350
- JP-A- 2011 057 018
- JP-A- 2012 025 370
- JP-A- 2014 199 041

## Description

The present invention relates to a leaning vehicle according to the preamble of independent claim 1. Such a leaning vehicle can be taken from the prior art document EP 2 127 920 A1.

Prior art document EP 2 292 496 A1 discloses a saddle riding type vehicle that includes a stabilizer arranged to support a pair of wheels arranged at opposite sides of a vehicle body to be movable up and down relative to the vehicle body, and a switching mechanism arranged to switch between a movable state in which the pair of wheels are permitted to move up and down and a locked state in which the pair of wheels are restricted from moving up and down. The switching mechanism includes a coupling pin member arranged to engage with the stabilizer to set the stabilizer to the locked state thereby restricting rotation of the stabilizer relative to the vehicle body, and to disengage from the stabilizer to set the stabilizer to the movable state thereby permitting rotation of the stabilizer relative to the vehicle body, and a solenoid fixed to the vehicle body and arranged to drive the coupling pin member into and out of engagement with the stabilizer. When the switching mechanism switches to the locked state, the vehicle can be parked and stored conveniently with the vehicle body standing unassisted.

PTL 1 discloses a leaning vehicle including a body frame that leans leftward or rightward of the leaning vehicle when the leaning vehicle turns left or right, and two front wheels that are disposed side by side in a left-right direction of the body frame. The leaning vehicle is a vehicle which is able to turn with its body frame leaning from a vertical direction. More specifically, the body frame leans rightward of the leaning vehicle when the vehicle turns rightward, while when the leaning vehicle turns leftward, the body frame leans leftward of the vehicle.

The leaning vehicle described in PTL 1 includes a link mechanism. The link mechanism is configured so as to cause the body frame to lean leftward or right of the leaning vehicle by changing relative positions of the left front wheel and the right front wheel to the body frame.

The leaning vehicle described in PTL 1 includes a leaning suppression mechanism configured to change a resisting force that acts against an operation of the link mechanism. A change in posture of the body frame is restrained when the operation of the link mechanism is suppressed by activating the leaning suppression mechanism. In stopping the leaning vehicle temporarily for a short stop, the rider can reduce a force that the rider has to apply to the leaning vehicle to maintain the posture thereof by activating the leaning suppression mechanism.

On the other hand, a system is provided which is designed to be activated in order to improve the convenience of the rider when the rider stops the leaning vehicle. In this description, the system is called an in-stop operation system. A mileage improving system or a brake assisting system may be exemplified as the in-stop operation system. The mileage improving system automatically stops the operation of an internal combustion engine of the leaning vehicle when the rider stops the leaning vehicle temporarily. This serves to improve the fuel consumption of the leaning vehicle. The brake assisting system applies a braking force or a driving force to the wheels so as to prevent the wheels from being rotated as a result of gravity while the leaning vehicle is temporarily stopped on a slope. This serves to reduce a load that the rider bears in operating brakes.

### Citation List

### Patent Literature

[PTL 1] Japanese Patent Publication No. 2005-313876A

An object of the presently disclosed subject matter is to provide a preferable operation logic for a leaning suppression mechanism and an in-stop operation system of a leaning vehicle equipped with a leanable body frame as well as a left wheel and a right wheel that are arranged side by side in a left-right direction of the body frame.

### Solution to Problem

In order to achieve the above object, an illustrative aspect of the presently disclosed subject matter provides a leaning vehicle comprising:
a body frame that is leanable leftward or rightward;
a left wheel and a right wheel that are arranged side by side in a left-right direction of the body frame;
an actuation member adapted to be operated by a rider;
a leaning suppression mechanism configured to be activated in accordance with an operation of the actuation member to change a resisting force to be applied against leaning of the body frame;
an in-stop operation system which is designed to be activated in order to improve a convenience of the rider when the rider stops the leaning vehicle and configured to be activated in a case where a velocity of the leaning vehicle is no less than a first velocity;
a control unit configured to activate the in-stop operation system even though the velocity is less than the first velocity, in a case where an activating condition for the leaning suppression mechanism is satisfied or an activation of the leaning suppression mechanism is detected.

In a case where the condition to activate the leaning suppression mechanism configured to change the resisting force applied to the vehicle body which is leaning is satisfied, or in a case where the leaning suppression mechanism is actually activated, it is highly probable that the leaning vehicle is in a temporal stop condition or is about to come to the temporal stop condition.

According to the configuration described heretofore, the in-stop operation system is activated even though the activating condition of the in-stop operation system (the velocity of the leaning vehicle is less than the first velocity) is not satisfied. Thus, the rider can enjoy the convenience of the in-stop operation system in an earlier stage. That is, it is possible to provide a preferable operation logic for the leaning suppression mechanism and the in-stop operation system of the leaning vehicle equipped with the leanable body frame as well as the left wheel and the right wheel that are arranged side by side in the left-right direction of the body frame.

The leaning vehicle may further comprise a link mechanism configured to change positions of the left wheel and the right wheel relative to the body frame thereby causing the body frame to lean leftward or rightward. The leaning suppression mechanism may be configured to apply the resisting force to an operation of the link mechanism in accordance with the operation of the actuation member.

According to the configuration described above, since the resisting force is applied to the operation of the link mechanism configured to control the leaning of the leaning vehicle and directly change the relative positions of the left wheel and the right wheel, the leaning suppression mechanism can be restrained from being enlarged in size and becoming complex in construction.

The leaning vehicle further comprise a power source configured to supply a driving force to the leaning vehicle. The in-stop operation system may include a mileage improving system configured to reduce an operation
amount of the power source.

According to the configuration described above, the activation timing of the mileage improving system may be brought forward. In other words, the time during which the mileage improving system is in operation can be extended. Accordingly, the energy consumption amount of the power source can be reduced.

The leaning vehicle further comprise a wheel disposed ahead of or behind the left wheel and the right wheel in a front-rear direction of the body frame. The in-stop operation system may include a brake assisting system configured to suppress rotation of at least one of the left wheel, the right wheel, and the wheel.be configured such that the control unit is configured to select one of the first mode and the second mode based on heat generated from the leaning actuator.

According to the configuration described above, the activation timing of the brake assisting system may be brought forward. In other words, the time during which the brake assisting system is in operation can be extended. Accordingly, it is possible to reduce a burden to the rider bears for operating the brakes while the rider stops the leaning vehicle, for example on a slope.

The leaning vehicle may be configured such that the control unit is configured to activate the leaning suppression mechanism irrespective of a state of the actuation member, in a case where an activation of the in-stop operation system is detected.

It is highly probable that the rider is stopping the leaning vehicle with his or her feet resting on the ground when the activation of the in-stop operation system is detected. Activating the leaning suppression mechanism after this state is established can restrain the leaning operation of the body frame to such a posture that reflects the intention of the rider. As a result, a
burden to the rider for maintaining the posture of the vehicle body can be reduced.

### Brief Description of Drawings

Fig. 1 is a left side view entirely illustrating a leaning vehicle according to one embodiment.
Fig. 2 is a front view illustrating a front portion of the leaning vehicle.
Fig. 3 is a plan view illustrating the front portion of the leaning vehicle.
Fig. 4 is a plan view illustrating the front portion of the leaning vehicle when leftward steering is performed.
Fig. 5 is a front view illustrating the leaning vehicle when leftward leaning is performed.
Fig. 6 is a rear view illustrating the leaning vehicle when leftward leaning and leftward steering are performed.
Fig. 7 is a diagram illustrating a functional configuration of the leaning vehicle; and
Fig. 8 is a flowchart illustrating processing executed by a control unit of the leaning vehicle.

### Description of Embodiments

Referring to the accompanying drawings, an exemplary embodiment will be described in detail below.

In the accompanying drawings, an arrow F denotes a front or forward direction of a leaning vehicle. An arrow B denotes a back/rear or backward/rearward direction of the leaning vehicle. An arrow U denotes an up or upward direction of the leaning vehicle. An arrow D denotes a down or downward direction of the leaning vehicle. An arrow R denotes a right or rightward direction of the leaning vehicle. An arrow L denotes a left or leftward direction of the leaning vehicle.

A leaning vehicle turns with a body frame being caused to lean to the left or right of the leaning vehicle from a vertical direction. Then, in addition to the directions based on the leaning vehicle, directions based on the body frame will be defined. In the accompanying drawings, an arrow FF denotes a front or forward direction of the body frame. An arrow FB denotes a back/rear or backward/rearward of the body frame. An arrow FU denotes an up or upward direction of the body frame. An arrow FD denotes a down or downward direction of the body frame. An arrow FR denotes a right or rightward direction of the body frame. An arrow FL denotes a left or leftward direction of the body frame.

In this description, a "front-rear direction of the body frame," a "left-right direction of the body frame" and an "up-down direction of the body frame" mean a front-rear direction, a left-right direction and an up-down direction based on the body frame when viewed from a rider who rides the leaning vehicle. "A side of or sideways of the body frame" means directly on the right or left in the left-right direction of the body frame.

In this description, an expression "extending in the front-rear direction of the leaning vehicle body frame" includes a fact that it extends while being inclined in relation to the front-rear direction of the leaning vehicle body frame and means that it extends in a direction closer to the front-rear direction of the leaning vehicle body frame than the left-right direction and up-down direction of the leaning vehicle body frame.

In this description, an expression "extending in the left-right direction of the leaning vehicle body frame" includes a fact that it extends while being inclined in relation to the left-right direction of the leaning vehicle body frame and means that it extends in a direction closer to the left-right direction of the leaning vehicle body frame than the front-rear direction and up-down direction of the leaning vehicle body frame.

In this description, an expression "extending in the up-down direction of the leaning vehicle body frame" includes a fact that it extends while being inclined in relation to the up-down direction of the leaning vehicle body frame and means that it extends in a direction closer to the up-down direction of the leaning vehicle body frame than the left-right direction and front-rear direction of the leaning vehicle body frame.

In this description, an expression reading the "leaning vehicle is standing upright or in an upright state" or the "body frame is standing upright or in the upright state" means a state in which the leaning vehicle is not steered at all and the up-down direction of the body frame coincides with the vertical direction. In this state, the directions based on the leaning vehicle coincide with the directions based on the body frame. When the leaning vehicle is turning with the body frame caused to lean to the left or right from the vertical direction, the left-right direction of the leaning vehicle does not coincide with the left-right direction of the body frame. Similarly, the up-down direction of the leaning vehicle does not coincide with the up-down direction of the body frame. However, the front-rear direction of the leaning vehicle coincides with the front-rear direction of the body frame.

In this description, an expression reading "directly on the left of a member A in the left-right direction of the body frame" denotes a space through which the member A passes when the member A is translated to the left in the left-right direction of the body frame. An expression reading "directly on the right of the member A" is also defined in the same way.

In this description, an expression reading "on the left of the member A in the left-right direction of the body frame" includes not only the space through which the member A passes when the member A is translated to the left in the left-right direction of the body frame but also a space which expands from the space in directions which are at right angles to the left-right direction of the body frame. An expression reading "on the right of the member A" is also defined in the same way.

In this description, an expression reading "directly above the member A in the up-down direction of the body frame" denotes a space through which the member A passes when the member A is translated rightward in the up-down direction of the body frame. An expression reading "directly below the member A" is also defined in the same way.

In this description, an expression reading "above the member A in the up-down direction of the body frame" includes not only the space through which the member A passes when the member A is translated rightward in the up-down direction of the body frame but also a space which expands from the space in directions which are at right angles to the up-down direction of the body frame. An expression reading "below the member A" is also defined in the same way.

In this description, an expression reading "directly ahead of the member A in the front-rear direction of the body frame" denotes a space through which the member A passes when the member A is translated to the front in the front-rear direction of the body frame. An expression reading "directly behind the member A" is also defined in the same way.

In this description, an expression reading "ahead of the member A in the front-rear direction of the body frame" includes not only the space through which the member A passes when the member A is translated to the front in the front-rear direction of the body frame but also a space which expands from the space in directions which are at right angles to the front-rear direction of the body frame. An expression reading "behind the member A" is also defined in the same way.

In this description, "rotation, rotating or rotated" means that a member is displaced at an angle of 360 degrees or more about an axis thereof. In this description, "turn, turning or turned" means that a member is displaced at an angle less than 360 degrees about an axis thereof.

In this description, "connected" or "coupled" specifies not only a case where one member and another member are directly connected but also a case where one member and another member are indirectly connected by way of still another member.

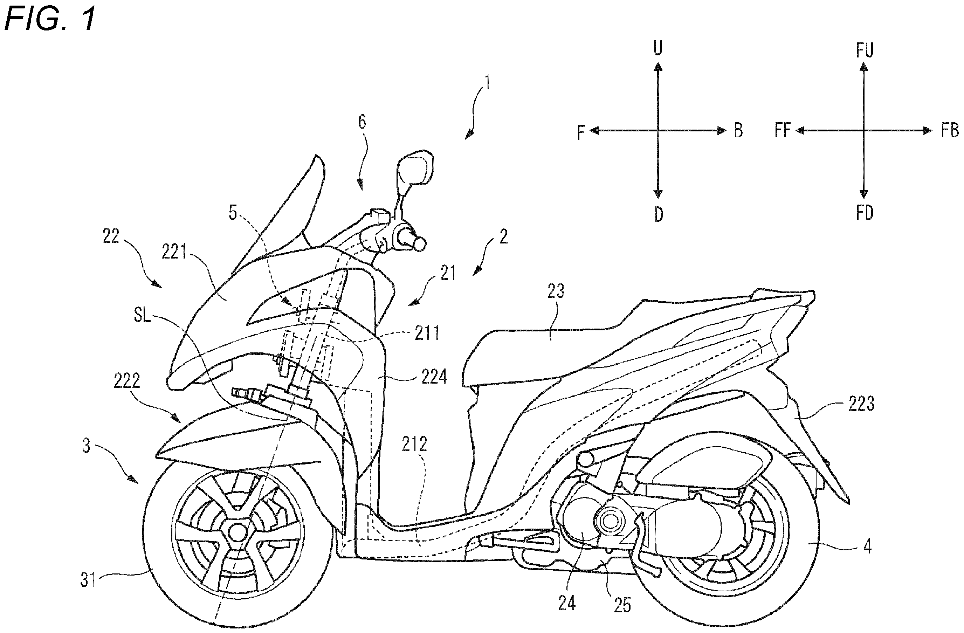

Referring to Figs. 1 to 8, a leaning vehicle 1 according to an embodiment will be described. As illustrated in Fig. 1, the leaning vehicle 1 includes a vehicle main body 2, two front wheels 3, a rear wheel 4, a link mechanism 5 and a steering mechanism 6.

The vehicle main body 2 includes a body frame 21, a body cover 22, a seat 23, a power unit 24, and a rear arm 25.

In Fig. 1, the body frame 21 is in an upright state. The following description that will be made while referring to Fig. 1 is based on the premise that the body frame 21 is in the upright state. Fig. 1 is a left side view in which the whole of the leaning vehicle 1 is viewed from the left in the left-right direction of the body frame 21.

The body frame 21 includes a head pipe 211 and a main frame 212.

The head pipe 211 is disposed at a front portion of the leaning vehicle 1. When seeing the leaning vehicle 1 from the left-right direction of the body frame 21, an upper portion of the head pipe 211 is disposed ahead of a lower portion of the head pipe 211 in the front-rear direction of the body frame 21.

The main frame 212 is connected to the head pipe 211. The main frame 212 is disposed behind the head pipe 211 in the front-rear direction of the body frame 21. The main frame 212 supports the seat 23, the power unit 24, and the rear arm 25.

The power unit 24 includes a power source such as an internal combustion engine or an electric motor and a transmission mechanism such as a transmission. A driving force generated by the drive source is transmitted to the rear wheel 4 by way of the transmission mechanism.

The rear arm 25 extends in the front-rear direction of the body frame 21. A front end portion of the rear arm 25 is supported on the main frame 212 and is allowed to turn about an axis that extends in the left-right direction of the body frame 21. A rear end portion of the rear arm 25 supports the rear wheel 4.

The body cover 22 is a body component that at least partially covers components that makes up the leaning vehicle 1. The body cover 22 includes a front cover 221, two front fenders 222, a rear fender 223, and a leg shield 224.

The front cover 221 is disposed ahead of the seat 23 in the front-rear direction of the body frame 21. The front cover 221 covers the link mechanism 5 and at least part of the steering mechanism 6. The front cover 221 is disposed in such a manner as not to be displaced relative to the body frame 21.

At least a portion of each of the front fenders 222 is disposed directly below the front cover 221. At least a portion of each of the front fenders 222 is disposed above the corresponding front wheel 3.

The two front wheels 3 are disposed below the head pipe 211 in the up-down direction of the body frame 21. At least portions of the two front wheels 3 are disposed directly below the front cover 221 in the up-down direction of the body frame 21.

At least a portion of the rear wheel 4 is disposed below the seat 23 in the up-down direction of the body frame 21. At least a portion of the rear wheel 4 is disposed directly below the rear front fender 223 in the up-down direction of the body frame 21.

The leg shield 224 is disposed behind the two front wheels 3 and ahead of the seat 23 in the front-rear direction of the body frame 21. The leg shield 224 is disposed in a position where the leg shield 224 at least partially covers the legs of the rider who sits on the seat 23 when viewed from the front of the leaning vehicle 1.

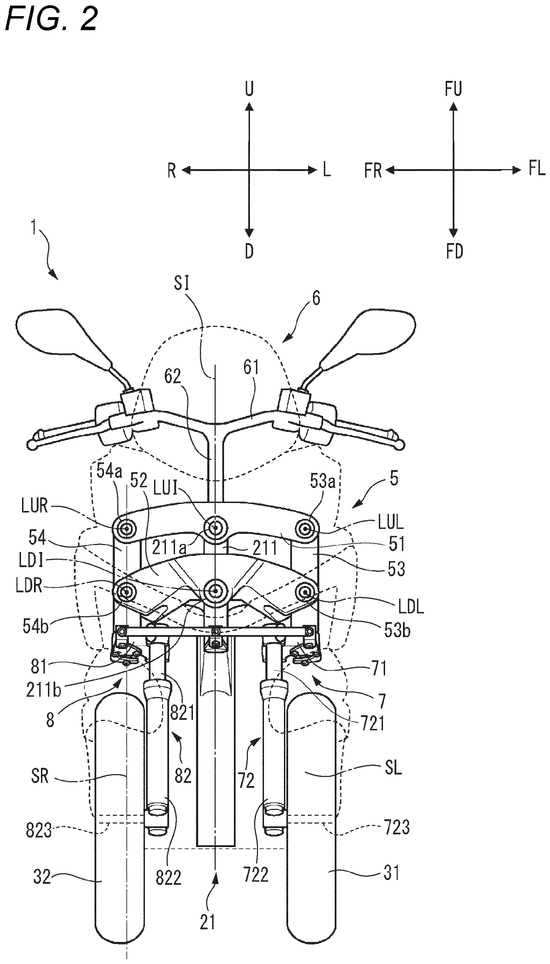

Fig. 2 is a front view of a front portion of the leaning vehicle 1 as viewed from the front of the leaning vehicle 1 in the front-rear direction of the body frame 21. In Fig. 2, the body frame 21 is in the upright state. The following description that will be made while referring to Fig. 2 is based on the premise that the body frame 21 is in the upright state. In Fig. 2, the front portion of the leaning vehicle 1 is illustrated as seen through the front cover 221, the two front fenders 222, and the leg shield 224 which are all indicated by dashed lines.

The two front wheels 3 include a left wheel 31 and a right wheel 32. The left wheel 31 is disposed on the left of the head pipe 211 which is a part of the body frame 21 in the left-right direction of the body frame 21. The right wheel 32 is disposed on the right of the head pipe 211 in the left-right direction of the body frame 21. The left wheel 31 and the right wheel 32 are disposed side by side in the left-right direction of the body frame 21.

The two front fenders 222 include a left front fender and a right front fender. The left fender at least partially covers an upper surface of the left wheel 31. The right fender at least partially covers an upper surface of the right wheel 32.

The steering mechanism 6 includes a handlebar 61 and the steering shaft 62. The steering shaft 62 extends downwards from an intermediate portion of the handlebar 61 in the left-right direction of the handlebar 61. The steering shaft 62 is supported on the head pipe 211 via an intermediate steering bearing portion (not illustrated). As a result, the steering shaft 62 can turn around an intermediate steering axis SI relative to the head pipe 211.

In the leaning vehicle 1 according to this embodiment, the link mechanism 5 adopts a parallel four-joint link (also referred to as a "parallelogram link").

The link mechanism 5 is disposed above the left wheel 31 and the right wheel 32 in the up-down direction of the body frame 21. The link mechanism 5 includes an upper cross member 51, a lower cross member 52, a left side member 53, and a right side member 54. The link mechanism 5 is not interlocked with the turning of the steering shaft 62 about the intermediate steering axis SI which occurs in association with the operation of the handlebar 61. That is, the link mechanism 5 does not turn around the intermediate steering axis SI relative to the body frame 21.

The head pipe 211 includes an upper intermediate leaning bearing portion 211a. An intermediate portion of the upper cross member 51 is supported on the head pipe 211 via the upper intermediate leaning bearing portion 211a. The upper cross member 51 can turn relative to the head pipe 211 around an upper intermediate leaning axis LUI that extends through the upper intermediate leaning bearing portion 211a in the front-rear direction of the body frame 21.

The head pipe 211 includes a lower intermediate leaning bearing portion 211b. An intermediate portion of the lower cross member 52 is supported on the head pipe 211 via the lower intermediate leaning bearing portion 211b. The lower cross member 52 can turn relative to the head pipe 211 around a lower intermediate leaning axis LDI that extends through the lower intermediate leaning bearing portion 211b in the front-rear direction of the body frame 21.

The left side member 53 includes an upper left leaning bearing portion 53a. A left end portion of the upper cross member 51 is coupled to the left side member 53 via the upper left leaning bearing portion 53a. The upper cross member 51 can turn relative to the left side member 53 around an upper left leaning axis LUL that extends through the upper left leaning bearing portion 53a in the front-rear direction of the body frame 21.

The right side member 54 includes an upper right leaning bearing portion 54a. A right end portion of the upper cross member 51 is coupled to the right side member 54 via the upper right leaning bearing portion 54a. The upper cross member 51 can turn relative to the right side member 54 around an upper right leaning axis LUR that extends through the upper right leaning bearing portion 54a in the front-rear direction of the body frame 21.

The left side member 53 includes a lower left leaning bearing portion 53b. A left end portion of the lower cross member 52 is coupled to the left side member 53 via the lower left leaning bearing portion 53b. The lower cross member 52 can turn relative to the left side member 53 around a lower left leaning axis LDL that extends through the lower left leaning bearing portion 53b in the front-rear direction of the body frame 21.

The right side member 54 includes a lower right leaning bearing portion 54b. A right end portion of the lower cross member 52 is coupled to the right side member 54 via the lower right leaning bearing portion 54b. The lower cross member 52 can turn relative to the right side member 54 around a lower right leaning axis LDR that extends through the lower right leaning bearing portion 54b in the front-rear direction of the body frame 21.

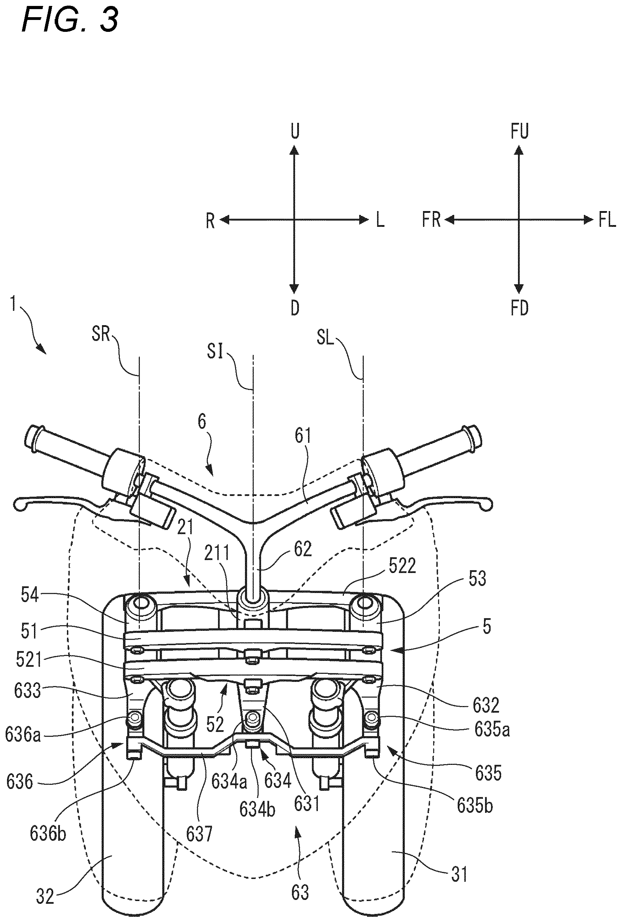

Fig. 3 is a plan view of the front portion of the leaning vehicle 1 as viewed from above in the up-down direction of the body frame 21. In Fig. 3, the body frame 21 is in the upright state. The following description that will be made while referring to Fig. 3 is based on the premise that the body frame 21 is in the upright state. In Fig. 3, the front portion of the leaning vehicle 1 is illustrated as seen through the front cover 221 and the two front fenders 222 that are all indicated by dashed lines.

The upper cross member 51 is disposed ahead of the head pipe 211 in the front-rear direction of the body frame 21. The upper cross member 51 is a plate-shaped member that extends in the left-right direction of the body frame 21 without being curved in the front-rear direction of the body frame 21.

As illustrated in Figs. 2 and 3, the lower cross member 52 is disposed below the upper cross member 51 in the up-down direction of the body frame 21. The lower cross member 52 includes a front element 521 and a rear element 522. The front element 521 is disposed ahead of the head pipe 211, the left side member 53 and the right side member 54 in the front-rear diction of the body frame 21. The rear element 522 is disposed behind the head pipe 211, the left side member 53 and the right side member 54 in the front-rear diction of the body frame 21. The front element 521 and the rear element 522 extend in the left-right direction of the body frame 21.

As illustrated in Figs. 2 and 3, the left side member 53 is disposed directly on the left of the head pipe 211 in the left-right direction of the body frame 21. The left side member 53 is disposed above the left wheel 31 in the up-down direction of the body frame 21. The left side member 53 extends in a direction in which the head pipe 211 extends. An upper portion of the left side member 53 is disposed behind a lower portion thereof in the front-rear direction of the body frame 21.

As illustrated in Figs. 2 and 3, the right side member 54 is disposed directly on the right of the head pipe 211 in the left-right direction of the body frame 21. The right side member 54 is disposed above the right wheel 32 in the up-down of the body frame 21. The right side member 54 extends in the direction in which the head pipe 211 extends. An upper portion of the right side member 54 is disposed behind a lower portion thereof in the front-rear direction of the body frame 21.

The upper cross member 51, the lower cross member 52, the left side member 53 and the right side member 54 are supported on the head pipe 211 so that the upper cross member 51 and the lower cross member 52 are kept parallel to each other in posture and that the left side member 53 and the right side member 54 are kept parallel to each other in posture.

As illustrated in Fig. 2, the leaning vehicle 1 includes a left suspension unit 7. The left suspension unit 7 includes a left bracket 71 and a left shock absorbing device 72.

The left bracket 71 includes a left turnable member (not illustrated) at an upper portion thereof. The left turnable member is disposed in an interior of the left side member 53 and extends in the same direction as a direction in which the left side member 53 extends. The left side member 53 includes a left steering bearing portion (not illustrated). The left turnable member is supported on the left side member 53 via the left steering bearing portion. As a result, the left turnable member can turn relative to the left side member 53 around a left steering axis SL. That is, the left bracket 71 is coupled to the left side member 53 in such a manner as to turn relative to the left side member 53 around the left steering axis SL.

The left steering axis SL extends in the direction in which the left side member 53 extends. As illustrated in Fig. 2, the left steering axis SL extends parallel to the intermediate steering axis SI of the steering shaft 62 in the up-down direction of the body frame 21. As illustrated in Fig. 3, the left steering axis SL extends parallel to the intermediate steering axis SI of the steering shaft 62 in the front-rear direction of the body frame 21.

The left shock absorbing device 72 is a so-called telescopic shock absorbing mechanism. As illustrated in Fig. 2, the left shock absorbing device 72 includes a left upper telescopic element 721, a left lower telescopic element 722, and a left wheel axle 723.

The left upper telescopic element 721 is supported on the left bracket 71. The left lower telescopic element 722 is coupled to the left upper telescopic element 721 in such a manner as to slide relative to the left upper telescopic element 721. A displacement of the left wheel 31 relative to the link mechanism 5 in the up-down direction of the body frame 21 is mitigated by the left lower telescopic element 722 sliding relative to the left upper telescopic element 721.

The left wheel axle 723 is supported on the left lower telescopic element 722. The left wheel axle 723 supports the left wheel 31. The left wheel 31 can rotate around the left wheel axle 723.

As illustrated in Fig. 2, the leaning vehicle 1 includes a right suspension unit 8. The right suspension unit 8 includes a right bracket 81 and a right shock absorbing device 82.

The right bracket 81 includes a right turnable member (not illustrated) at an upper portion thereof. The right turnable member is disposed in an interior of the right side member 54 and extends in the same direction as a direction in which the right side member 54 extends. The right side member 54 includes a right steering bearing portion (not illustrated). The right turnable member is supported on the right side member 54 via the right steering bearing portion. As a result, the right turnable member can turn relative to the right side member 54 around a right steering axis SR. That is, the right bracket 81 is coupled to the right side member 54 in such a manner as to turn relative to the right side member 54 around the right steering axis SR.

The right steering axis SR extends in a direction in which the right side member 54 extends. As illustrated in Fig. 2, the right steering axis SR extends parallel to the intermediate steering axis SI of the steering shaft 62 in the up-down direction of the body frame 21. As illustrated in Fig. 3, the right steering axis SR extends parallel to the intermediate steering axis SI of the steering shaft 62 in the front-rear direction of the body frame 21.

The right shock absorbing device 82 is a so-called telescopic shock absorbing mechanism. As illustrated in Fig. 2, the right shock absorbing device 82 includes a right upper telescopic element 821, a right lower telescopic element 822, and a right wheel axle 823.

The right upper telescopic element 821 is supported on the right bracket 81. The right lower telescopic element 822 is coupled to the right upper telescopic element 821 in such a manner as to slide relative to the right upper telescopic element 821. A displacement of the right wheel 32 relative to the link mechanism 5 in the up-down direction of the body frame 21 is mitigated by the right lower telescopic element 822 sliding relative to the right upper telescopic element 821.

The right wheel axle 823 is supported on the right lower telescopic element 822. The right wheel axle 823 supports the right wheel 32. The right wheel 32 can rotate around the right wheel axle 823.

As illustrated in Fig. 1, the left steering axis SL is inclined rearwards in the front-rear direction of the body frame 21 from the vertical direction (the up-down direction of the body frame 21). That is, a caster angle is provided. Similarly, the right steering axis SR is inclined rearwards in the front-rear direction of the body frame 21 from the vertical direction (the up-down direction of the body frame 21. That is, a caster angle is provided.

As illustrated in Fig. 3, the steering mechanism 6 includes a steering force transmission mechanism 63. The steering force transmission mechanism 63 includes an intermediate transmission plate 631, a left transmission plate 632, a right transmission plate 633, an intermediate joint 634, a left joint 635, a right joint 636 and a tie rod 637.

The intermediate transmission plate 631 is provided at a lower portion of the steering shaft 62. The intermediate transmission plate 631 can turn relative to the head pipe 211 around a turning axis that extends parallel to the intermediate steering axis SI of the steering shaft 62.

The left transmission plate 632 is disposed directly on the left of the intermediate transmission plate 631. The left transmission plate 632 is connected to a lower portion of the left bracket 71. The left transmission plate 632 cannot turn relative to the left bracket 71. The left transmission plate 632 can turn relative to the left side member 53 around the left steering axis SL.

The right transmission plate 633 is disposed directly on the right of the intermediate transmission plate 631 in the left-right direction of the body frame 21. The right transmission plate 633 is connected to a lower portion of the right bracket 81. The right transmission plate 633 cannot turn relative to the right bracket 81. The right transmission plate 633 can turn relative to the right side member 54 around the right steering axis SR.

The intermediate joint 634 includes an intermediate joint steering bearing portion 634a. The intermediate joint steering bearing portion 634a defines an intermediate joint steering axis that extends in the up-down direction of the body frame 21. The intermediate joint 634 is coupled to a front portion of the intermediate transmission plate 631 via the intermediate joint steering bearing portion 634a. As a result, the intermediate joint 634 can turn relative to the intermediate transmission plate 631 around the intermediate joint steering axis.

The left joint 635 is disposed on the left of the intermediate joint 634 in the left-right direction of the body frame 21. The left joint 635 includes a left joint steering bearing portion 635a. The left joint steering bearing portion 635a defines a left joint steering axis that extends in the up-down direction of the body frame 21. The left joint 635 is coupled to a front portion of the left transmission plate 632 via the left joint steering bearing portion 635a. As a result, the left joint 635 can turn relative to the left transmission plate 632 around the left joint steering axis.

The right joint 636 is disposed on the right of the intermediate joint 634 in the left-right direction of the body frame 21. The right joint 636 includes a right joint steering bearing portion 636a. The right joint steering bearing portion 636a defines a right joint steering axis that extends in the up-down direction of the body frame 21. The right joint 636 is coupled to a front portion of the right transmission plate 633 via the right joint steering bearing portion 636a. As a result, the right joint 636 can turn relative to the right transmission plate 633 around the right joint steering axis.

The intermediate joint 634 includes an intermediate joint leaning bearing portion 634b. The intermediate joint leaning bearing portion 634b defines an intermediate joint leaning axis that extends in the front-rear direction of the body frame 21. An intermediate portion of the tie rod 637 is coupled with the intermediate joint leaning bearing portion 634b. The intermediate portion of the tie rod 637 can turn relative to the intermediate joint leaning bearing portion 634b around the intermediate joint leaning axis.

The left joint 635 includes a left joint leaning bearing portion 635b. The left joint leaning bearing portion 635b defines a left joint leaning axis that extends in the front-rear direction of the body frame 21. A left portion of the tie rod 637 is coupled with the left joint leaning bearing portion 635b. The left portion of the tie rod 637 can turn relative to the left joint leaning bearing portion 635b around the left joint leaning axis.

The right joint 636 includes a right joint leaning bearing portion 636b. The right joint leaning bearing portion 636b defines a right joint leaning axis that extends in the front-rear direction of the body frame 21. A right portion of the tie rod 637 is coupled with the right joint leaning bearing portion 636b. The right portion of the tie rod 637 can turn relative to the right joint leaning bearing portion 636b around the right joint leaning axis.

The left transmission plate 632 is coupled with the intermediate transmission plate 631 via the left joint 635, the tie rod 637 and the intermediate joint 634. The right transmission plate 633 is coupled with the intermediate transmission plate 631 via the right joint 636, the tie rod 637 and the intermediate joint 634. The left transmission plate 632 and the right transmission plate 633 are coupled with each other via the left joint 635, the tie rod 637 and the right joint 636. In other words, the tie rod 637 couples the intermediate transmission plate 631 with the left transmission plate 632 and the right transmission plate 633.

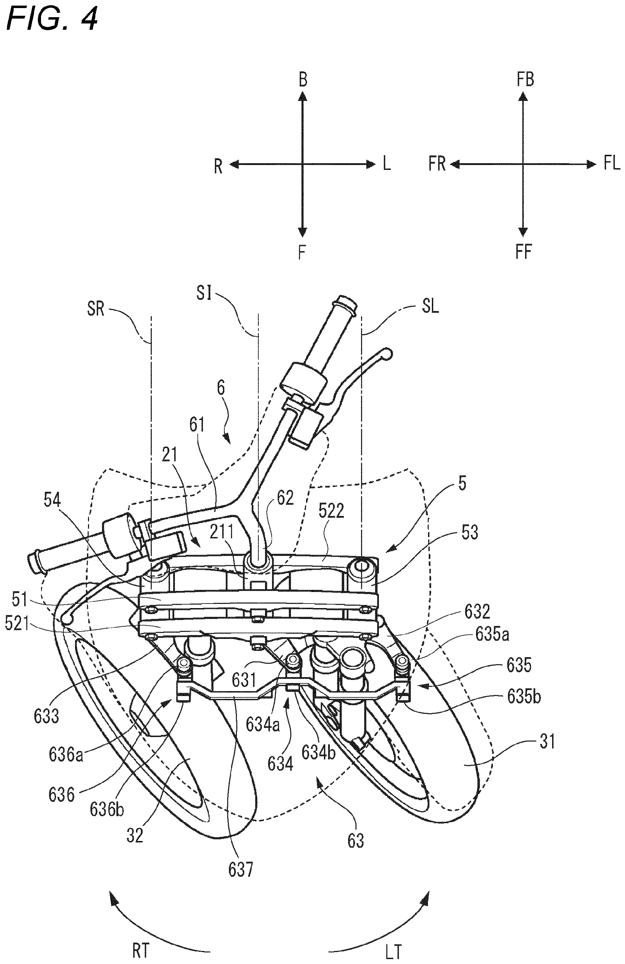

Next, referring to Fig. 4, a steering operation of the leaning vehicle 1 will be described. Fig. 4 is a plan view of the front portion of the leaning vehicle 1 as viewed from above in the up-down direction of the body frame 21, with the left wheel 31 and the right wheel 32 steered to turn leftward. In Fig. 4, the body frame 21 is in the upright state. The following description that will be made while referring to Fig. 4 is based on the premise that the body frame 21 is in the upright state. In Fig. 4, the front portion of the leaning vehicle 1 is illustrated as seen through the front cover 221 and the two front fenders 222, which are all indicated by dashed lines.

When the rider operates the handlebar 61, the steering shaft 62 turns around the intermediate steering axis SI relative to the head pipe 211. In the case of the front wheels being steered to turn leftward as illustrated in Fig. 4, the steering shaft 62 turns in a direction indicated by an arrow LT. The intermediate transmission plate 631 turns in the direction indicated by the arrow LT around the intermediate steering axis SI relative to the head pipe 211.

The intermediate joint 634 of the tie rod 637 turns in a direction indicated by an arrow RT relative to the intermediate transmission plate 631 as the intermediate transmission plate 631 turns in the direction indicated by the arrow LT. As a result, the tie rod 637 moves leftward in the left-right direction of the body frame 21 and to the rear in the front-rear direction of the body frame 21 while maintaining its posture as it is.

As the tie rod 637 moves in the way described above, the left joint 635 and the right joint 636 of the tie rod 637 turn in the direction indicated by the arrow RT relative to the left transmission plate 632 and the right transmission plate 633, respectively. As a result, the left transmission plate 632 and the right transmission plate 633 turn in the direction indicated by the arrow LT while the tie rod 637 maintains its posture as it is.

When the left transmission plate 632 turns in the direction indicated by the arrow LT, the left bracket 71, which is not allowed to turn relative to the left transmission plate 632, turns in the direction indicated by the arrow LT around the left steering axis SL relative to the left side member 53.

When the right transmission plate 633 turns in the direction indicated by the arrow LT, the right bracket 81, which is not allowed to turn relative to the right transmission plate 633, turns in the direction indicated by the arrow LT around the right steering axis SR relative to the right side member 54.

When the left bracket 71 turns in the direction indicated by the arrow LT, the left shock absorbing device 72, which is supported on the left bracket 71, turns in the direction indicated by the arrow LT around the left steering axis SL relative to the left side member 53. When the left shock absorbing device 72 turns in the direction indicated by the arrow LT, the left wheel 31, which is supported on the left shock absorbing device 72 via the left wheel axle 723, turns in the direction indicated by the arrow LT around the left steering axis SL relative to the left side member 53. As this occurs, the left front fender also turns in the direction indicated by the arrow LT together with the left wheel 31.

When the right bracket 81 turns in the direction indicated by the arrow LT, the right shock absorbing device 82, which is supported on the right bracket 81, turns in the direction indicated by the arrow LT around the right steering axis SR relative to the right side member 54. When the right shock absorbing device 82 turns in the direction indicated by the arrow LT, the right wheel 32, which is supported on the right shock absorbing device 82 via the right wheel axle 823, turns in the direction indicated by the arrow LT around the right steering axis SR relative to the right side member 54. As this occurs, the right front fender also turns in the direction indicated by the arrow LT together with the right wheel 32.

When the driver operates the handlebar 61 so as to steer the left and right wheels to turn rightward, the elements described above turn in an opposite direction to the direction in which they turn when the left and right front wheels are steered to turn leftward. Since the elements move simply in the opposite directions in the left-right direction of the body frame 21, detailed descriptions for the movements of the elements when the rider so operates the handlebar 61 will be omitted here.

That is, the steering force transmission mechanism 63 couples the left suspension unit 7 and the right suspension unit 8 together and turns the left wheel 31 and the right wheel 32 in the direction in which the handlebar 61 is turned.

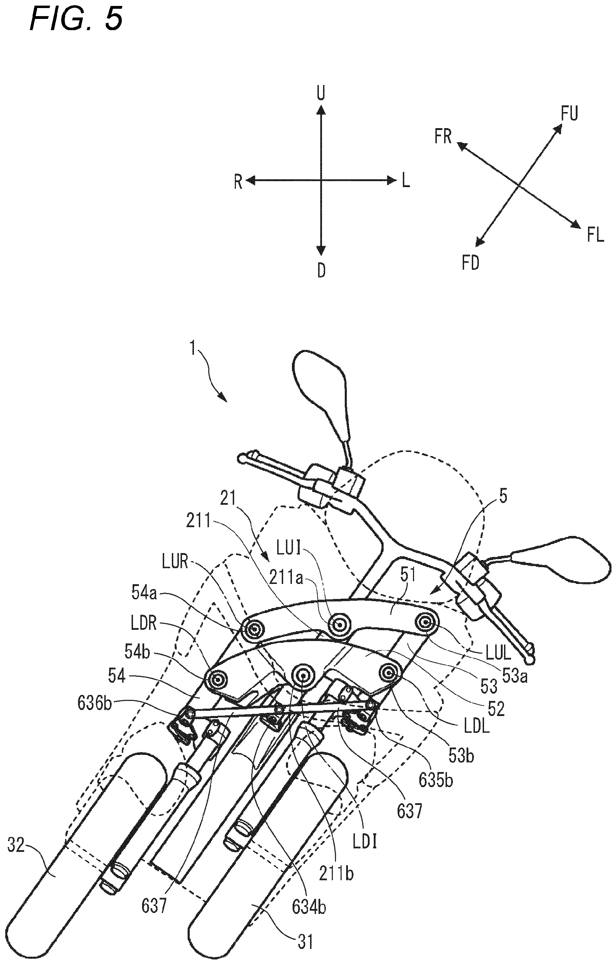

Next, referring to Figs. 2 and 5, a leaning operation of the leaning vehicle 1 will be described. Fig. 5 is a front view of the front portion of the leaning vehicle 1 as viewed from the front in the front-rear direction of the body frame 21, with the body frame 21 caused to lean leftward of the leaning vehicle 1. In Fig. 5, the front portion of the leaning vehicle 1 is illustrated as seen through the front cover 221, the two front fenders 222, and the leg shield 224, which are all indicated by dashed lines.

As illustrated in Fig. 2, when the leaning vehicle 1 is viewed from the front of the body frame 21 which is in the upright state, the link mechanism 5 exhibits a rectangle shape. As illustrated in Fig. 5, when the leaning vehicle 1 is viewed from the front of the body frame 21 which is leaning, the link mechanism 5 exhibits a parallelogram shape. An activation of the link mechanism 5 is interlocked with the leaning of the body frame 21 in the left-right direction. The "activation of the link mechanism 5" means a change in the shape of the link mechanism 5 as a result of the upper cross member 51 and the lower cross member 52 turning relative to the head pipe 211 around the upper intermediate leaning axis LUI and the lower intermediate leaning axis LDI, respectively, and the upper cross member 51, the lower cross member 52, the left side member 53 and the right side member 54 turning relatively around the upper left leaning axis LUL, the upper right leaning axis LUR, the lower left leaning axis LDL and the lower right leaning axis LDR, respectively.

For example, as illustrated in Fig. 5, when the rider leans the leaning vehicle 1 leftward, the head pipe 211 leans leftward relative to the vertical direction. When the head pipe 211 leans so, the upper cross member 51 turns counterclockwise relative to the head pipe 211 around the upper intermediate leaning axis LUI that passes through the upper intermediate leaning bearing portion 211a when the leaning vehicle 1 is viewed from the front thereof. Similarly, the lower cross member 52 turns counterclockwise relative to the head pipe 211 around the lower intermediate leaning axis LDI that passes through the lower intermediate leaning bearing portion 211b when the leaning vehicle 1 is viewed from the front thereof. As a result, the upper cross member 51 moves leftward in the left-right direction of the body frame 21 relative to the lower cross member 52.

As a result of the upper cross member 51 moving in the way described above, the upper cross member 51 turns counterclockwise about the upper left leaning turning axis LUL that passes the upper left leaning bearing portion 53a and the upper right leaning turning axis LUR that passes through the upper right leaning bearing portion 54a relative to the left side member 53 and the right side member 54, respectively, when viewed from the front of the leaning vehicle 1. Similarly, the lower cross member 52 turns counterclockwise about the lower left leaning turning axis LDL that passes the lower left leaning bearing portion 53b and the lower right leaning turning axis LDR that passes through the lower right leaning bearing portion 54b relative to the left side member 53 and the right side member 54, respectively, when viewed from the front of the leaning vehicle 1. As a result, the left side member 53 and the right side member 54 lean leftward of the leaning vehicle 1 from the vertical direction while maintaining their postures parallel to the head pipe 211.

As this occurs, the lower cross member 52 moves leftward in the left-right direction of the body frame 21 relative to the tie rod 637. As a result of the lower cross member 52 moving in the way described above, the tie rod 637 turns relative to the intermediate joint 634, the left joint 635, and the right joint 636 around the intermediate joint leaning bearing portion 634b, the left joint leaning bearing portion 635b, and the right joint leaning bearing portion 636b, respectively. As a result, the tie rod 637 keeps its posture parallel to the upper cross member 51 and the lower cross member 52.

The left bracket 71, which is supported on the left side member 53 via the left turnable member, leans leftward of the leaning vehicle 1 as the left side member 53 leans leftward of the leaning vehicle 1. In association with the leftward leaning of the left bracket 71, the left shock absorbing device 72, which is supported on the left bracket 71, also leans leftward of the leaning vehicle 1. As a result, the left wheel 31, which is supported on the left shock absorbing device 72, leans leftward of the leaning vehicle 1 while maintaining its posture parallel to the head pipe 211.

The right bracket 81, which is supported on the right side member 54 via the right turnable member, leans leftward of the leaning vehicle 1 as the right side member 54 leans leftward of the leaning vehicle 1. In association with the leftward leaning of the right bracket 81, the right shock absorbing device 82, which is supported on the right bracket 81, also leans leftward of the leaning vehicle 1. As a result, the right wheel 32, which is supported on the right shock absorbing device 82, leans leftward of the leaning vehicle 1 while maintaining its posture parallel to the head pipe 211.

The leaning operations of the left wheel 31 and the right wheel 32 are described based on the vertical direction. However, when the leaning vehicle 1 leans (when the link mechanism 5 is activated), the up-down direction of the body frame 21 does not coincide with the vertical up-down direction. In describing the leaning operation of the left wheel 31 and the right wheel 32 based on the up-down direction of the body frame 21, when the link mechanism 5 is activated, the relative positions of the left wheel 31 and the right front wheel 32 in the up-down direction of the body frame 21 are changed. In other words, the link mechanism 5 changes the relative positions of the left wheel 31 and the right wheel 32 in the up-down direction of the body frame 21 to thereby lean the body frame 21 from the vertical direction leftward of the leaning vehicle 1. As a result, the leaning vehicle 1 turns leftward.

When the rider leans the leaning vehicle 1 rightward, the relevant elements lean rightward. This causes the leaning vehicle 1 to turn rightward. Since the elements move simply in the opposite directions in the left-right direction of the body frame 21, detailed descriptions for the movements of the elements when the rider so operates the handlebar 61 will be omitted here.

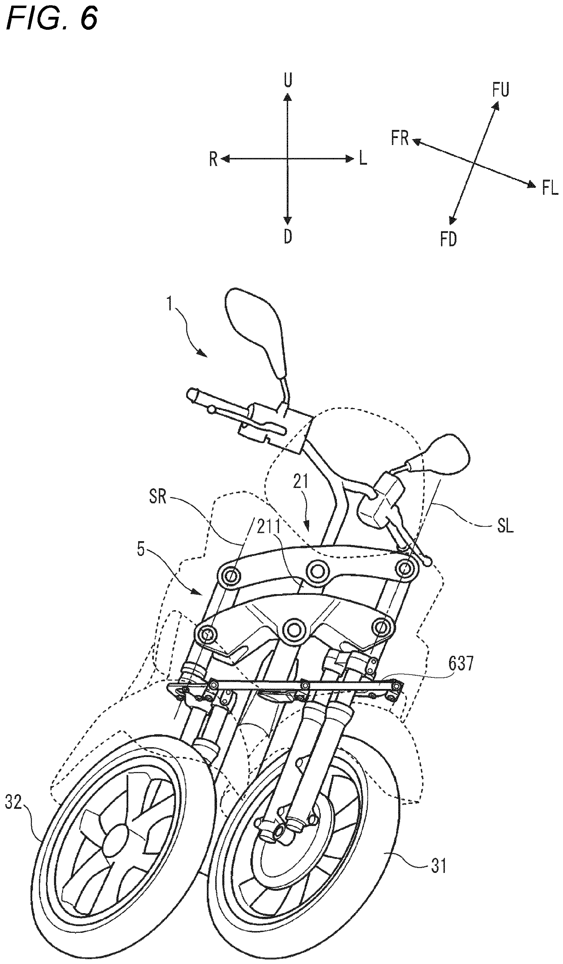

Fig. 6 is a front view of the front portion of the leaning vehicle 1 when viewed from the front in the front-rear direction of the body frame 21, with the leaning vehicle 1 leaned leftward and steered to turn leftward. Fig. 6 illustrates the front portion of the leaning vehicle 1 as seen through the front cover 221 and the two front fenders 222, which are all indicated by dashed lines.

When the front wheels are steered to turn as described above, the left wheel 31 is turned counterclockwise around the left steering axis SL, while the right wheel 32 is turned counterclockwise around the right steering axis SR. The left wheel 31 and the right wheel 32 lean leftward of the leaning vehicle 1 together with the body frame 21 as a result of the leaning operation being performed as described above. That is, in this state, the link mechanism 5 is exhibiting the parallelogram shape. The tie rod 637 has moved leftward in the left-right direction of the body frame 21 and rearward in the front-rear direction of the body frame 21 from the position of the tie rod 637 at which the body frame 21 stays in the upright state.

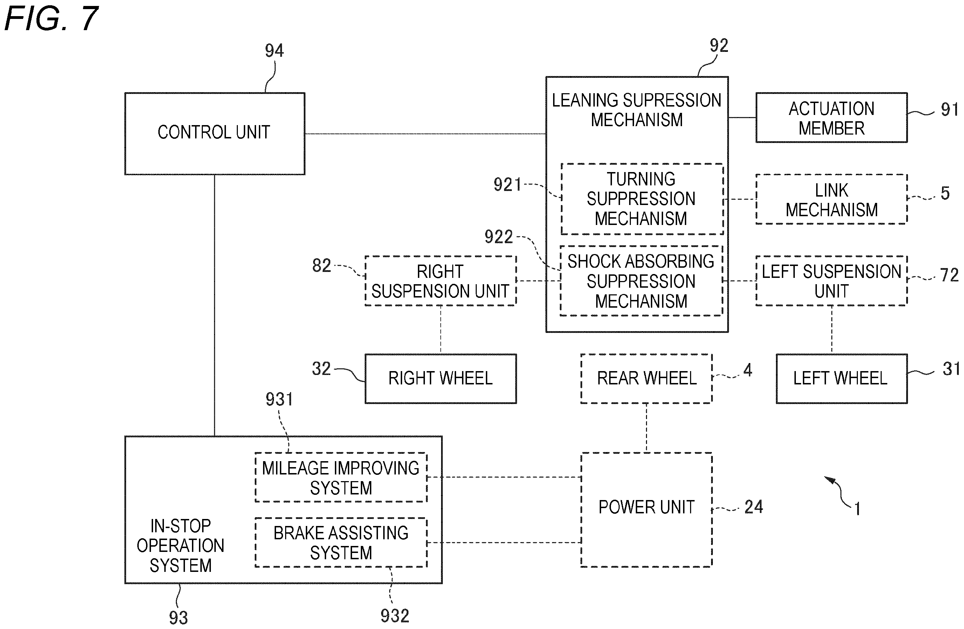

As illustrated in Fig. 7, the leaning vehicle 1 includes an actuation member 91. The actuation member 91 is configured to be operated by the rider of the leaning vehicle 1. A switch or a lever may be exemplified as the actuation member 91. The actuation member 91 is not limited to a member that is operated by a hand or a foot of the rider but may include, as an example thereof, a device that can be activated by a line of sight of the rider or voice of the rider as an input.

The leaning vehicle 1 includes a leaning suppression mechanism 92. The leaning suppression mechanism 92 is mechanically or electrically connected with the actuation member 91. The leaning suppression mechanism 92 is activated by operating the actuation member 91. The leaning suppression mechanism 92 changes a resisting force that is applied against the body frame 21 which is leaning. The resisting force applied to the body frame 21 which is leaning leftward or rightward of the leaning vehicle 1 is increased by activating the leaning suppression mechanism 92. A specific example of the leaning suppression mechanism 92 will be described later.

The leaning vehicle 1 includes an in-stop operation system 93. The in-stop operation system 93 includes a known velocity sensor (not illustrated) configured to detect a velocity of the leaning vehicle 1. The in-stop operation system 93 is configured to be activated in a case where a detected velocity of the leaning vehicle 1 is less than a first velocity V1. A specific example of the in-stop operation system 93 will be described later.

The leaning vehicle 1 includes a control unit 94. The control unit 94 is connected with the leaning suppression mechanism 92 and the in-stop operation system 93 so that communication can be performed therebetween.

The control unit 94 may be a microcomputer. The microcomputer includes a processor and a memory. A CPU, an MPU, and a GPU may be exemplified as the processor. The processor may include a plurality of processor cores. A ROM and a RAM may be exemplified as the memory. The ROM may store a program for executing the operations described above. The program may include an artificial intelligence program. A pretrained neural network based on deep learning is exemplified as the artificial intelligent program. The processor may designate at least part of the program stored in the ROM, load it on the RAM, and execute the operations described above in cooperation with the RAM. The control unit 94 may be configured as a control device such as an ECU, may be configured by an integrated circuit such as an ASIC or an FPGA, or may be configured by a combination of a microcomputer and an integrated circuit.

The control unit 94 is configured to activate the in-stop operation system 93 even though the detected velocity of the leaning vehicle 1 is no less than the first velocity V1 when an activating condition of the leaning suppression mechanism 92 is satisfied or when an activation of the leaning suppression mechanism 92 is detected.

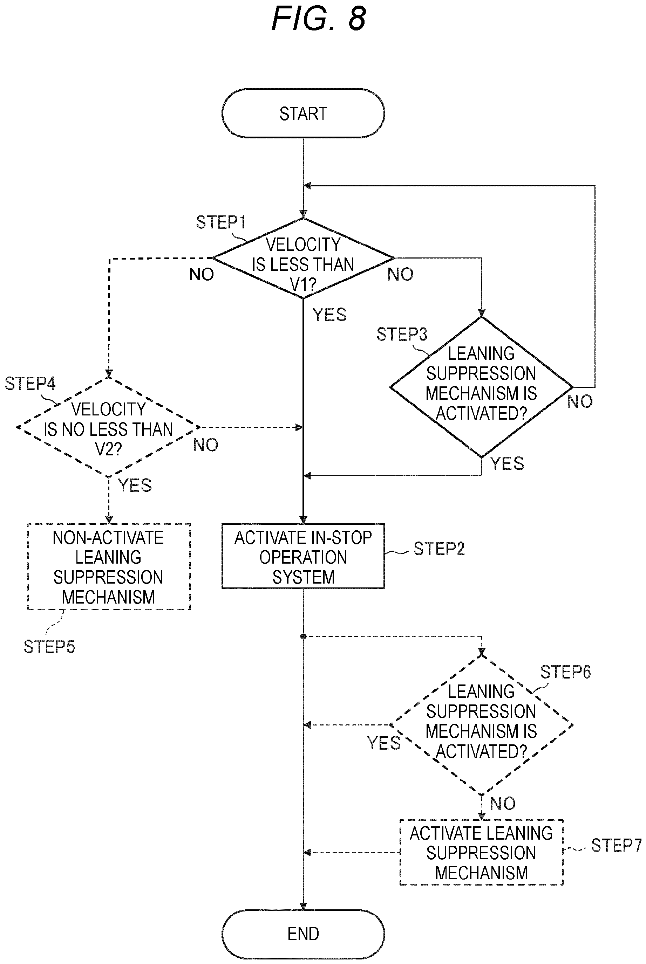

Fig. 8 illustrates a specific example of an operation executed by the control unit 94. The control unit 94 determines whether the detected velocity of the leaning vehicle 1 is less than the first velocity V1 (STEP 1). As described above, if the detected velocity is less than the first velocity V1 (YES in STEP 1), the control unit 94 activates the in-stop operation system 93 (STEP 2).

If the detected velocity is no less than the first velocity V1 (NO in STEP1), the control unit 94 determines whether the leaning suppression mechanism 92 has been activated (STEP3). The "determination on whether the leaning suppression mechanism 92 has been activated" becomes positive if the activating condition of the leaning suppression mechanism 92 is satisfied or if an activation of the leaning suppression mechanism 92 is detected as descried above.

For example, when an input to the actuation member 91 is detected, the activating condition of the leaning suppression mechanism 92 is satisfied. Specifically, the activating condition is satisfied when the switch or the lever is displaced, when a voice input operation is accepted by a voice input device, or when a line of sight input operation is accepted by a line of sight input device. An actuation of the leaning suppression mechanism 92 may be determined through detection of a displacement of a mechanism component by a displacement sensor or the like.

If the control unit 94 determines that the leaning suppression mechanism 92 has been activated (YES in STEP3), the control unit 94 activates the in-stop operation system 93 (STEP2). That is, if the control unit 94 determines that the leaning suppression mechanism 92 has been activated, the control unit 94 activates the in-stop operation system 93 even though the detected velocity of the leaning vehicle is no less than the first velocity V1.

If the control unit 94 determines that the detected velocity of the leaning vehicle 1 is no less than the first velocity V1 and that the leaning suppression mechanism 92 has not yet been activated (NO in STEP3), the operation returns to STEP1.

In a case where the condition to activate the leaning suppression mechanism 92 configured to change the resisting force applied to the vehicle body 21 which is leaning is satisfied, or in a case where the leaning suppression mechanism 92 is actually activated, it is highly probable that the leaning vehicle 1 is in a temporal stop condition or is about to come to the temporal stop condition.

According to the configuration described heretofore, the in-stop operation system 93 is activated even though the activating condition of the in-stop operation system 93 (the velocity of the leaning vehicle 1 is less than the first velocity V1) is not satisfied. Thus, the rider can enjoy the convenience of the in-stop operation system 93 in an earlier stage. That is, it is possible to provide a preferable operation logic for the leaning suppression mechanism 92 and the in-stop operation system 93 of the leaning vehicle 1 equipped with the leanable body frame 21 as well as the left wheel 31 and the right wheel 32 that are arranged side by side in the left-right direction of the body frame 21.

The leaning vehicle 1 may include a switching device such as a switch configured to selectively switch between a mode in which the activation of the in-stop operation system 93 in association with the activation of the leaning suppression mechanism 92 or the satisfaction of the activating condition of the leaning suppression mechanism 92 as described above is enabled and a mode in which the association of the in-stop operation system 93 with the leaning suppression mechanism 92 as described above is disabled.

As illustrated in Fig. 7, the leaning suppression mechanism 92 may include a turning suppression mechanism 921. The turning suppression
mechanism 921 may be configured to apply a resisting force acting against the link mechanism 5 which is activated in response to an operation of the actuation member 91.

As the turning suppression mechanism 921, it is possible to exemplify a mechanism configured to provide a resisting force against a turning of the upper cross member 51 or the lower cross member 52 relative to the head pipe 211 or a mechanism configured to prevent the upper cross member 51 or the lower cross member 52 from turning relative to the head pipe 211.

For example, a plate-shaped member is attached to the upper cross member 51 or the lower cross member 52, while a caliper device configured to grip the plate-shaped member is attached to the head pipe 211. The turning of the upper cross member 51 or the lower cross member 52 relative to the head pipe 211 can be suppressed or prevented by causing the caliper device to grip the plate-shaped member at a required timing.

Alternatively, an actuator including an electric motor or a hydraulic motor may be provided. The actuator may apply, to the link mechanism 5, a force causing the upper cross member 51 and the lower cross member 52 to turn in such a direction as to restrain the body frame 21 from leaning relative to the head pipe 211, the left side member 53, and the right side member 54. For example, the leaning actuator applies, to the link mechanism 5, a force to turn the upper cross member 51 and the lower cross member 52 clockwise relative to the head pipe 211, the left side member 53, and the right side member 54, under a condition that an angle of the body frame 21 that leans leftward of the leaning vehicle 1 is increasing. As a result, the body frame 21 can be restrained from leaning leftward of the leaning vehicle 1.

According to the configuration described above, since the resisting force is applied to the operation of the link mechanism 5 configured to control the leaning of the leaning vehicle 1 and directly change the relative positions of the left wheel 31 and the right wheel 32, the leaning suppression mechanism 92 can be restrained from being enlarged in size and becoming complex in construction. Additionally, even when the body frame 21 is restrained from leaning as a result of the resisting force being applied to the operating link mechanism 5, the body of the leaning vehicle 1 is permitted to change its posture using the left shock absorbing device 72 and the right shock absorbing device 82. Thus, the followability of the wheels of the leaning vehicle 1 to a road surface whose condition is changing as the leaning vehicle 1 moves can be ensured to some extent. Consequently, the improvement in convenience can be achieved while maintaining good maneuverability of the vehicle body.

Alternatively, as illustrated in Fig. 7, the leaning suppression mechanism 92 may include a shock absorbing suppression mechanism 922. The shock absorbing suppression mechanism 922 applies a resisting force acting against the operations of the left shock absorbing device 72 and the right shock absorbing device 82.

As the shock absorbing suppression mechanism 922, it is possible to exemplify a mechanism configured to suppress the relative displacement of the left upper telescopic element 721 and the left lower telescopic element 722 and suppress the relative displacement of the right upper telescopic element 821 and the right lower telescopic element 822. For example, in the case of a mechanism configured to generate a damping force by providing working fluid and a passageway for the working fluid in an interior thereof, the relative displacement of the upper telescopic element and the lower telescopic element can be suppressed by closing the passageway or reducing a cross-sectional area of the passageway.

Alternatively, a mechanism including a rod member and a caliper device may be adopted. In this case, the rod member is provided on either the upper telescopic element or the lower telescopic element in such a manner as to extend along a direction in which the two elements are displaced relative to each other. The caliper device is provided on the other of the upper telescopic element and the lower telescopic element in such a manner as to grip the rod member. A relative displacement of the upper telescopic element and the lower telescopic element can be restricted by causing the caliper device to grip the rod member at a required timing.

According to the configuration described above, even when the body frame 21 is restrained from leaning as a result of the resisting force being applied to the operation of the left shock absorbing device 72 and the right shock absorbing device 82, the body of the leaning vehicle 1 is permitted to change its posture using the link mechanism 5. Thus, the followability of the wheels of the leaning vehicle 1 to a road surface whose condition is changing as the leaning vehicle 1 moves can be ensured to some extent. Consequently, the improvement in convenience can be achieved while maintaining good maneuverability of the vehicle body.

The leaning suppression mechanism 92 may include both the turning suppression mechanism 921 and the shock absorbing suppression mechanism 922. In this case, a common actuation member may be provided to serve as an actuation member configured to activate the turning suppression mechanism 921 and an actuation member configured to activate the shock absorbing suppression mechanism 922, or independent actuation members may be provided for the turning suppression mechanism 921 and the shock absorbing suppression mechanism 922. In order to obtain the effects described above, however, in at least the case that a non-stopped state of the leaning vehicle 1 is detected, it is preferable that the control unit 94 activates either the turning suppression mechanism 921 or the shock absorbing suppression mechanism 922.

As illustrated in Fig. 7, the in-stop operation system 93 may include a mileage improving system 931. The mileage improving system 931 is connected with the power unit 24 so that communication can be performed therebetween. The mileage improving system 931 reduces an operation amount of a power source for the power unit 24.

In the case that the power unit 24 includes a multi-cylinder internal combustion engine as a drive source, the mileage improving system 931 reduces the operation amount of the power unit 24 by stopping the operation of at least one of the cylinders of the internal combustion engine. Alternatively, the mileage improving system 931 may stop a so-called idling operation of the internal combustion engine. In the case that the power unit 24 includes an electric motor as a power source, the mileage improving system 931 reduces the operation amount of the power unit 24 by reducing a rotating amount of the electric motor. The rotating amount of the electric motor may be reduced to zero.

The function of the mileage improving system 931 described above may be realized by a microcomputer. The microcomputer includes a processor and a memory. A CPU, an MPU, and a GPU may be exemplified as the processor. A ROM and a RAM may be exemplified as the memory. The ROM may store a program for executing the operations described above. The processor may designate at least part of the program stored in the ROM, load it on the RAM, and execute the operations described above in cooperation with the RAM. The function of the mileage improving system 931 may be realized by an integrated circuit such as an ASIC or an FPGA or may be configured by a combination of a microcomputer and an integrated circuit. At least part of the function of the mileage improving system 931 may be realized by the microcomputer configured to realize the function of the control unit 94.

As described before, according to the configuration of this embodiment, the rider may enjoy the convenience of the in-stop operation system 93 in an earlier stage. In other words, it is possible to bring forward the activation timing of the mileage improving system 931. As a result, since the time during which the mileage improving system 931 is in operation can be extended, the energy consumption amount of the power source can be reduced.

The control unit 94 may be configured to activate the leaning suppression mechanism 92 irrespective of the state of the actuation member 91 in a case where an activation of the mileage improving system 931 is detected.

Specifically, as illustrated in Fig. 8, the control unit 94 determines whether the leaning suppression mechanism 92 has been activated after the in-stop operation system 93 is activated in STEP2 (STEP6). If the control unit 94 determines that the leaning suppression mechanism 92 has not been activated (NO in STEP6), the control unit 94 activates the leaning suppression mechanism 92 (STEP7). In a case where the control unit 94 determines that the leaning suppression mechanism 92 has already been activated (YES in STEP6), the control unit 94 ends the operation.

It is highly probable that the rider is stopping the leaning vehicle 1 with his or her feet resting on the ground when the activation of the mileage improving system 931 is detected. Activating the leaning suppression mechanism 92 after this state is established can restrain the leaning operation of the body frame 21 to such a posture that reflects the intention of the rider. As a result, a burden to the rider for maintaining the posture of the vehicle body can be reduced.

As illustrated in Fig. 7, the in-stop operation system 93 may include a brake assisting system 932. The brake assisting system 932 is connected with the power unit 24 so that communication can be performed therebetween. The brake assisting system 932 may cause the power unit 24 to apply a braking force or a driving force to the rear wheel 4 so as to prevent the rear wheel 4 from being rotated as a result of gravity while the leaning vehicle 1 is temporarily stopped, for example, on a slope.

The function of the brake assisting system 932 described above may be realized by a microcomputer. The microcomputer includes a processor and a memory. A CPU, an MPU, and a GPU may be exemplified as the processor. A ROM and a RAM may be exemplified as the memory. The ROM may store a program for executing the operations described above. The processor may designate at least part of the program stored in the ROM, load it on the RAM, and execute the operations described above in cooperation with the RAM. The function of the brake assisting system 932 may be realized by an integrated circuit such as ASIC or FPGA or may be configured by a combination of a microcomputer and an integrated circuit. At least part of the function of the brake assisting system 932 may be realized by the microcomputer configured to realize the function of the control unit 94.

As described before, according to the configuration of this embodiment, the rider may enjoy the convenience of the in-stop operation system 93 in an earlier stage. In other words, it is possible to bring forward the activation timing of the brake assisting system 932. As a result, since the time during which the brake assisting system 932 is in operation can be extended, it is possible to reduce a burden to the rider bears for operating the brakes while the rider stops the leaning vehicle 1, for example on a slope.

The control unit 94 may be configured to activate the leaning suppression mechanism 92 irrespective of the state of the actuation member 91 in a case where an activation of the brake assisting system 932 is detected.

Specifically, as illustrated in Fig. 8, the control unit 94 determines whether the leaning suppression mechanism 92 has been activated after the in-stop operation system 93 is activated in STEP2 (STEP6). If the control unit 94 determines that the leaning suppression mechanism 92 has not been activated (NO in STEP6), the control unit 94 activates the leaning suppression mechanism 92 (STEP7). In a case where the control unit 94 determines that the leaning suppression mechanism 92 has already been activated (YES in STEP6), the control unit 94 ends the operation.

It is highly probable that the rider is stopping the leaning vehicle 1 with his or her feet resting on the ground when the activation of the brake assisting system 932 is detected. Activating the leaning suppression mechanism 92 after this state is established can restrain the leaning operation of the body frame 21 to such a posture that reflects the intention of the rider. As a result, a burden to the rider for maintaining the posture of the vehicle body can be reduced.

The embodiment that has been described heretofore is intended to facilitate the understanding of the presently disclosed subject matter and is hence not intended to limit the contents of the presently disclosed subject matter. The embodiment can be modified or improved without departing from the gist of the presently disclosed subject matter.

In the embodiment described above, the driving force is supplied from the power source of the power unit 24 to the rear wheel 4. In addition to or in place of this configuration, the driving force from the drive source of the power unit 24 may be supplied to at least one of the left wheel 31 and the right wheel 32.

In the embodiment described above, the leaning vehicle 1 includes two front wheels 3 and single rear wheel 4. However, the leaning vehicle 1 may include a plurality of rear wheels.

The rear wheel 4 is disposed behind the left wheel 31 and the right wheel 32 in the front-rear direction of the body frame 21. In addition to or in place of the rear wheel 4, at least one wheel may be provided which is disposed behind the left wheel 31 and the right wheel 32 in the front-rear direction of the body frame 21. In this case, the driving force from the power source of the power unit 24 may be supplied to at least one of the left wheel 31, the right wheel 32, and the wheel so provided.

In the embodiment described above, the handlebar 61 is provided as a single member that extends in the left-right direction of the body frame. However, the handlebar 61 may be made up of individual members including a left handlebar portion configured to be operated by the left hand of the rider and a right handlebar portion configured to be operated by the right hand of the rider, provided that steering force to turn the left wheel 31 and the right wheel 32 can be inputted through the handlebar 61. Alternatively, the handlebar 61 may take a form of a steering wheel or a steering rod.

A configuration may be adopted in which the link mechanism 5 includes a cross member other than the upper cross member 51 and the lower cross member 52. The "upper cross member" and the "lower cross member" are merely so called based on their relative positional relationship in the up-down direction of the body frame. The upper cross member is not intended to imply an uppermost cross member in the link mechanism 5. The "lower cross member" implies a cross member which lies below another cross member. The lower cross member is not intended to imply a lowermost cross member in the link mechanism 5. The "lower cross member" implies a cross member which lies below another cross member.

In the embodiment described above, the link mechanism 5 includes the so-called parallel four-joint link system. Namely, the upper cross member 51, the lower cross member 52, the left side member 53 and the right side member 54 are supported on the body frame 21 so that the upper cross member 51 and the lower cross member 52 are kept parallel to each other in posture and that the left side member 53 and the right side member 54 are kept parallel to each other in posture. However, a so-called double wishbone-type link mechanism may also be adopted, provided that the body frame 21 can be leaned leftward or right of the leaning vehicle 1 by changing the relative positions of the left wheel 31 and the right wheel 32 to the body frame 21.

In this case, an interlocking mechanism is necessary which is configured to transfer a motion of one of the left wheel 31 and the right wheel 32 in the up-down direction of the body frame 21 to the other as a motion in an opposite direction. In this case, the resisting force that is applied by the leaning suppression mechanism 92 may be applied to the interlocking mechanism.

When used in this description, the expression "so as not to be movable relative to the body frame 21" means that a certain part or member is caused to lean in the left-right direction of the leaning vehicle 1 together with the body frame 21 when the body frame 21 is caused to lean in the left-right direction of the leaning vehicle 1. When used in this description, the expression "so as not to be movable relative to the body frame 21" may comprehend not only a case where a certain part or member is directly fixed to the body frame but also a case where the certain part of member is fixed to a leaning vehicle component (a fuel tank, a bracket, the power unit 24, etc.) which is fixed on the body frame 21. Here the term "fixed" may comprehend a case that a certain part or member is fixed by way of a damping member or the like.

The disclosed concept can be implemented with many different embodiments. This description should be understood to provide a principle embodiment of the disclosed concept. The preferred embodiment which is at least described or illustrated in this description is so described or illustrated based on the understanding that the embodiment is not intended to limit the disclosed concept.

## Claims

1. A leaning vehicle (1) comprising:
a body frame (21) that is leanable leftward or rightward;
a left wheel (31) and a right wheel (32) that are arranged side by side in a left-right direction of the body frame (21);
a power source configured to supply a driving force to the leaning vehicle (1),
a wheel (4) disposed ahead of or behind the left wheel (31) and the right wheel (32) in a front-rear direction of the body frame (21),
a leaning suppression mechanism (92) configured to change a resisting force to be applied against leaning of the body frame (21);
an in-stop operation system (93) which is designed to be activated in order to improve a convenience of the rider when the rider stops the leaning vehicle and configured to be activated in a case where a velocity of the leaning vehicle (1) is less than a first velocity (V1); and
a control unit (94) configured to activate the in-stop operation system (93) even though the velocity is no less than the first velocity (V1), in a case where an activating condition for the leaning suppression mechanism (92) is satisfied or an activation of the leaning suppression mechanism (92) is detected, **characterized by**
an actuation member (91) adapted to be operated by a rider, the leaning suppression mechanism (92) is configured to be activated in accordance with an operation of the actuation member (91) to change a resisting force to be applied against leaning of the body frame (21), wherein
the in-stop operation system (93) includes a mileage improving system (931) configured to reduce an operation amount of the power source, and/or
the in-stop operation system (93) includes a brake assisting system (932) configured to suppress rotation of at least one of the left wheel (31), the right wheel (32), and the wheel (4) disposed ahead of or behind the left wheel (31) and the right wheel (32).

2. The leaning vehicle (1) according to claim 1, **characterized by:**
a link mechanism (5) configured to change positions of the left wheel (31) and the right wheel (32) relative to the body frame (21) thereby causing the body frame (21) to lean leftward or rightward,
wherein the leaning suppression mechanism (92) is configured to apply the resisting force to an operation of the link mechanism (5) in accordance with the operation of the actuation member (91).

3. The leaning vehicle (1) according to claim 1 or 2, **characterized in that** the control unit (94) is configured to activate the leaning suppression mechanism (92)
irrespective of a state of the actuation member (91), in a case where an activation of the in-stop operation system (93) is detected.

## Patentansprüche

1. Ein Neigefahrzeug (1), das umfasst:
einen Körperrahmen (21), der nach links oder rechts neigbar ist;
ein linkes Rad (31) und ein rechtes Rad (32), die in einer Links-Rechts-Richtung des Körperrahmens (21) Seite-an-Seite angeordnet sind;
eine Leistungsquelle, die konfiguriert ist, um eine Antriebskraft dem Neigefahrzeug (1) zu zuführen,
ein Rad (4), das vor oder hinter dem linken Rad (31) und dem rechten Rad (32) in einer Vorder-Rück-Richtung des Körperrahmens (21) angeordnet ist,
einen Neige-Unterdrückungs-Mechanismus (92), der konfiguriert ist, um eine Widerstandskraft, die gegen die Neigung des Körperrahmens (21) aufzubringen ist, zu verändern;
ein Anhalte-Betätigungssystem (93), das ausgelegt ist, um aktiviert zu werden, um den Komfort des Fahrers zu verbessern, wenn der Fahrer das Neigefahrzeug anhält, und das konfiguriert ist, um in einem Fall aktiviert zu werden, in dem eine Geschwindigkeit des Neigefahrzeugs (1) geringer als eine erste Geschwindigkeit (V1) ist; und
eine Steuereinheit (94), die konfiguriert ist, um das Anhalte-Betätigungssystem (93) zu aktivieren, auch wenn die Geschwindigkeit nicht kleiner als die erste Geschwindigkeit (V1) ist, in einem Fall, in dem eine Aktivierungsbedingung für den Neige-Unterdrückungs-Mechanismus (92) erfüllt ist oder eine Aktivierung des Neige-Unterdrückungs-Mechanismus (92) erfasst wird, **gekennzeichnet durch**
ein Betätigungselement (91), das dazu ausgelegt ist, von einem Fahrer betätigt zu werden, der Neige-Unterdrückungs-Mechanismus (92) ist konfiguriert, um in Übereinstimmung mit einer Betätigung des Betätigungselements (91) aktiviert zu werden, um eine Widerstandskraft, die gegen die Neigung des Körperrahmens (21) anzulegen ist, zu ändern, wobei
das Anhalte-Betätigungssystem (93) ein Laufleistungs-Verbesserungs-System (931) enthält, das konfiguriert ist, um eine Betriebsmenge der Leistungsquelle zu reduzieren, und/oder
das Anhalte-Betätigungssystem (93) ein Bremsunterstützungssystem (932) enthält, das konfiguriert ist, um die Drehung von zumindest einem, dem linken Rad (31), dem rechten Rad (32), und dem Rade (4), das vor oder hinter dem linken Rad (31) und dem rechten Rad (32) angeordnet ist, zu unterdrücken.

2. Das Neigefahrzeug (1) gemäß Anspruch 1, **gekennzeichnet durch:**
einen Lenkermechanismus (5), der konfiguriert ist, um die Positionen des linken Rades (31) und des rechten Rades (32) relativ zum Körperrahmen (21) zu ändern, wodurch der Körperrahmen (21) veranlasst wird, sich nach links oder nach rechts zu neigen,
wobei der Neige-Unterdrückungs-Mechanismus (92) konfiguriert ist, um die Widerstandskraft auf eine Betätigung des Lenkermechanismus (5) in Übereinstimmung mit der Betätigung des Betätigungselements (91) auszuüben.

3. Das Neigefahrzeug (1) gemäß Anspruch 1 oder 2, **dadurch gekennzeichnet, dass** die Steuereinheit (94) konfiguriert ist, um den Neige-Unterdrückungs-Mechanismus (92) unabhängig von einem Zustand des Betätigungselements (91) in einem Fall zu aktivieren, in dem eine Aktivierung des Anhalte-Betätigungssystems (93) erkannt wird.

## Revendications

1. Véhicule s'inclinant (1) comprenant :
un cadre (21) qui peut s'incliner vers la gauche ou vers la droite,
une roue gauche (31) et une roue droite (32) qui sont disposées côte à côte dans la direction gauche droite du cadre (21),
une source d'énergie configurée pour délivrer une force d'entraînement au véhicule s'inclinant (1),
une roue (4) disposée en avant ou en arrière de la roue gauche (31) et de la roue droite (32) dans la direction avant arrière du cadre (21),
un mécanisme de suppression d'inclinaison (92) configuré pour modifier la force de résistance à appliquer par rapport à l'inclinaison du cadre (21),
un système d'opération à l'arrêt (93) qui est conçu pour être activé afin d'améliorer le confort du pilote lorsque le pilote arrête le véhicule s'inclinant et qui est configuré pour être activé dans le cas où la vitesse du véhicule s'inclinant (1) est inférieure à une première vitesse (V1), et
une unité de commande (94) configurée pour activer le système d'opération à l'arrêt (93) même si la vitesse n'est pas inférieure à la première vitesse (V1) dans le cas où est satisfaite une condition d'activation du mécanisme de suppression d'inclinaison (92) ou si une activation du mécanisme de suppression d'inclinaison (92) est détectée, **caractérisé par :**
un élément d'actionnement (91) conçu pour être manoeuvré par le pilote, le mécanisme de suppression d'inclinaison (92) étant configuré pour être activé en fonction d'une manoeuvre de l'élément d'actionnement (91) destinée à modifier la force de résistance à appliquer par rapport à l'inclinaison du cadre (21), où
le système d'opération à l'arrêt (93) inclut un système d'amélioration du kilométrage (931) configuré pour réduire la valeur de manoeuvre de la source d'énergie, et/ou
le système d'opération à l'arrêt (93) inclut un système d'assistance au freinage (932) configuré pour limiter la rotation d'au moins l'une de la roue gauche (31), de la roue droite (32) et de la roue (4) placée à l'avant ou à l'arrière de la roue gauche (31) et de la roue droite (32).

2. Véhicule s'inclinant (1) selon la revendication 1, **caractérisé par :**
un mécanisme de liaison (5) configuré pour modifier les positions de la roue gauche (31) et de la roue droite (32) par rapport au cadre (21) ce qui entraîne ainsi le cadre (21) à pencher vers la gauche ou vers la droite,
dans lequel le mécanisme de suppression d'inclinaison (92) est configuré pour appliquer la force de résistance à une manoeuvre du mécanisme de liaison (5) en fonction de la manoeuvre de l'élément d'actionnement (91).

3. Véhicule s'inclinant (1) selon la revendication 1 ou la revendication 2, **caractérisé en ce q**ue l'unité de commande (94) est configurée pour activer le mécanisme de suppression d'inclinaison (92) indépendamment de l'état de l'élément d'actionnement (91) dans le cas où une activation du système d'opération à l'arrêt (93) a été détectée.
